# EUROPEAN PATENT APPLICATION

(11) **EP 4 686 826 A1**
(43) Date of publication of application: **04.02.2026**
(21) Application number: 24207690.9
(22) Date of filing: 21.10.2024
(51) Int. Cl.: F03D 1/06, F03D 13/10, F03D 80/50

(54) **A SYSTEM FOR INSTALLATION AND REMOVAL OF A WIND TURBINE BLADE AND METHOD THEREOF**

(30) Priority: 02.08.2024 IN 202411058743
(71) Applicant: RE Technologies GmbH, 22083 Hamburg (DE)
(72) Inventor: Khan, Yousuff, 560066 Bengaluru, Karnataka (IN)
(74) Representative: Buzzi, Notaro & Antonielli d'Oulx S.p.A.

(57) **Abstract**

The present invention provides a system (100) and method for craneless installation and removal of a wind turbine blade (121) in which a load bearing mechanism (111) to be mounted on the nacelle (101). Further, the pulleys (3, 31) are attached to the blade (121) and rope (151) is connected to a pulley (3) at one end and another end of the rope is connected to a mechanical winch (5) positioned at the base of the wind turbine tower to hoist the blade (121) for maintenance and removal.

## Description

### Field of Invention:

The present invention relates to a wind power system. Particularly, the present invention relates to the system and method for installation and removal of a wind turbine blade.

### Background of the Invention

The following background discussion includes information that may be useful in understanding the present invention. It is not an admission that any of the information provided herein is prior art or relevant to the presently claimed invention, or that any publication expressly or implicitly referenced is prior art.

In operation, the inflow of the wind strikes the wind turbine blades, which in turn activates the rotor. The rotor and the wind turbine blades spin the main shaft which in turn activates the generator. The wind turbine blades are subjected to constant failure and damage, thereby requiring regular maintenance. The inner elements of the hub and the nacelle which include the slewing ring bearing also require constant maintenance, which requires the removal of the wind turbine blade.

In the existing art, replacing a single blade on a wind turbine often requires the use of multiple cranes such as main lifting crane, tail crane and auxiliary/support crane. The primary function of the main lifting crane is to lift the blade into position, and it must have the capacity to reach the height of the wind turbine hub, which is usually than 140 meters. Further, the tail crane assists in guiding and stabilizing the blade during the lifting process. In addition, for installation of blades several tools are required and for assisting the installation auxiliary crane are required which usually carries several types of tools for installation. The requirement of several types of cranes and equipment makes blade removal and installation a cumbersome and costly process. To address the mentioned problem, existing arts have tried different approaches, for example US11300104B2 discloses an apparatus for removing and installing a blade for a wind turbine. The apparatus comprising a first set of cable guides mounted within the nacelle, and a second set of cable guides positioned on an exterior surface of the rotor hub. An upper pulley block is suspended from a first hub flange and a second hub flange, wherein the upper pulley block is positioned above a third hub flange in a position for accepting the blade. A winch is positioned at a ground level, and the winch contains a lifting cable guided by the cable guides, and then reeved through the upper pulley block and a lower pulley block on a blade holding bracket, allowing the lower pulley block to be raised and lowered relative to the upper pulley block. The blade holding bracket attaches to the root end of the blade, and the lower pulley block is allowed to pivot and swivel relative to the blade holding bracket.

Further, US9476403B2 discloses a wind turbine blade lowering apparatus for attachment/removal of rotor blades. The wind turbine lowering apparatus comprises a tower resting on a base, at least one rotor blade having a blade connector portion, a nacelle housing a shaft to which a hub is attached, the nacelle being mounted atop the tower. Said hub of the wind turbine comprises a plurality of hub connection flanges, each hub connection flange being adapted to be detachably connected to a blade connector portion of a rotor blade.

Another document, US9500090B2 discloses method of craneless dismounting and/or mounting of blades. The method comprises mounting a number of bolt-like extensions in positions, where fastening bolts have been removed or could be received. These extensions are much longer than the fastening bolts, so that the blade may be handled using the extensions to a position where a lifting yoke may be attached or detached, either for lowering or lifting the blade. The method may be performed without a separate crane and is particularly useful in relation to blade maintenance, repair or removal at remote wind turbine sites which would incur high costs for a mobile crane. Moreover, the method may be performed without having personnel going outside the hub or nacelle but can stay at the ground and within the hub.

In the above-mentioned documents, a provision within the hub itself are made to support pulleys and brackets. These provisions are typically incorporated during the design, development, and manufacturing of the hub. Therefore, these designs cannot be used for hubs that do not have these provisions, limiting its applicability. Additionally, the aforementioned provisions require extra space within the hub. |Due to the limitations to the solutions provided by the mentioned prior art, there is need of a system and method which can overcome the said limitations of the prior arts.

The present invention provides system and method for installation and removal of a wind turbine blade, which is suitable for all types of the wind turbines, and it does not require additional space for the installation.

### Objective of the Invention:

The primary objective of the present invention is to overcome the drawbacks associated with prior arts.

Another object of the present invention is to provide system and method for installation and removal of a wind turbine blade.

Another object of the present invention is to provide method and system of replacing single blade by eliminating a main crane from the process.

Another object of the present invention is to provide method and system of replacing single blade by process which requires less space compared to the earlier method.

### Summary of the Invention:

In an embodiment, present invention provides a system (100) for installation and removal of a blade (121) of a wind turbine generator (110), the system (100) comprising:
a) a first (3) and a second pulley (31) mounted respectively on the first and second sides of the blade (121);
b) a first winch (5) and a second winch (51) mounted on the ground in proximity of a base of a tower (201) of the wind turbine generator (110), the locations of the first and second winches (4, 41) corresponding to the same longitudinal plane as the respective first and second sides of the blade (121);
c) a load bearing mechanism (111) mounted on a nacelle (101) of the wind turbine generator (110), the load bearing mechanism (111) comprising a first pair of pulleys (1, 2) mounted on the load bearing mechanism (111) corresponding to a location in the same longitudinal plane as the first side of the blade and a second pair of pulleys (11, 21) mounted on the load bearing mechanism (111) corresponding to a location in the same longitudinal plane as the second side of the blade;
d) a first lifting cable or rope (151) connected to the first winch (5) and passing through a first winch pulley (4) mounted on the ground in proximity to the first winch (5), the first pulley (3) and the first pair of pulleys (1, 2) such that upon actuating the first winch (5), the blade (121) is moved upwards for installation or downwards for removal;
e) a second lifting cable or rope (161) connected to the second winch (51) and passing through the second winch pulley (41) mounted on the ground in proximity to the first winch (5), the second pulley (31) and the second pair of pulleys (11, 21) such that upon actuating the second winch (51), the blade (121) is moved upwards or downwards; and
synchronizing the actuations of the first and the second winches (5, 51) so as to move the blade (121) upwards or downwards in a balanced load condition on either side, wherein the blade (121) is moved upwards or downwards.

In an embodiment, the method for installation and removal of a wind turbine blade (121) by the system (100) as claimed in claim 1, the method comprising:
a) removing a nacelle cover from a wind turbine nacelle (101);
b) installing a load bearing mechanism (111) on the wind turbine nacelle (101) to support the blade (121) during installation and removal where the load bearing mechanism (111) length is extended over a hub;
c) manually mounting the load bearing mechanism (111) on the nacelle (101) followed by attaching the first (3) and the second pulley (31) to the blade (121), to be installed/ removed, and connecting the ropes (151, 161) to the first pulley (3) and the second pulley (310) at one end and another end of the ropes (151, 161) to a mechanical winches (5, 51) positioned at the base of the wind turbine tower or on the ground near the tower; and
   synchronizing the actuations of the first and the second winches (5, 51) so as to move the blade (121) upwards or downwards in a balanced load condition on either side, wherein the blade (121) is moved upwards or downwards.

### Detailed description of drawings:

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of their scope. The invention will be described and explained with additional specificity and detail with the accompanying drawings in which:
Fig. 1: illustrates the wind turbine of the present invention;

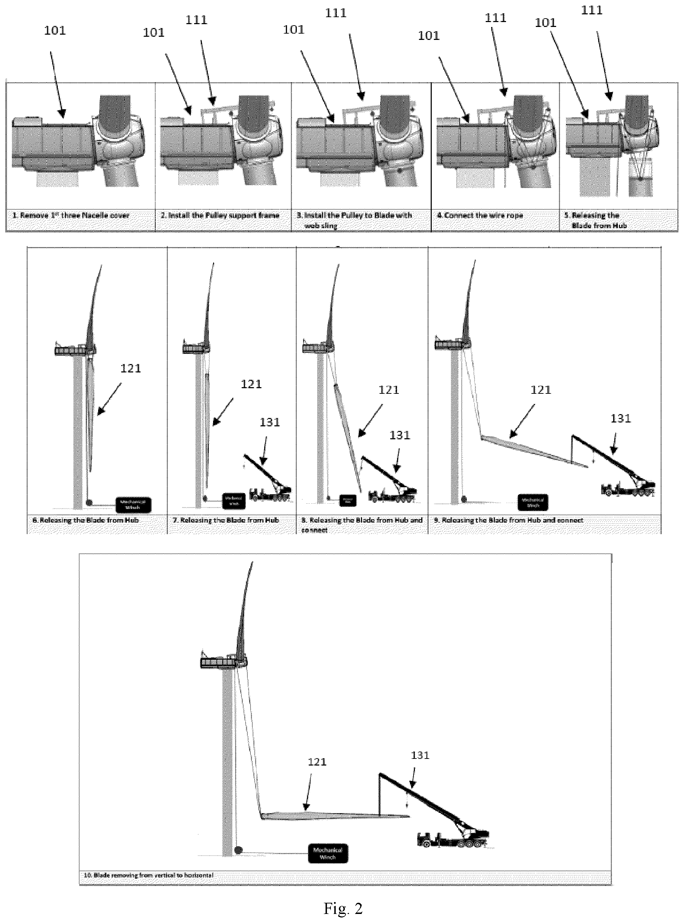

Fig. 2: illustrates process of dismantling the blade from the wind turbine in the present invention;

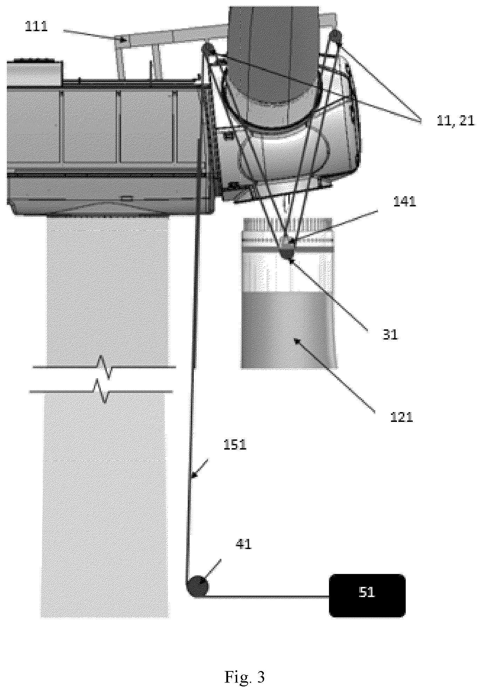

Fig. 3: illustrates the system and components of system of present invention; and

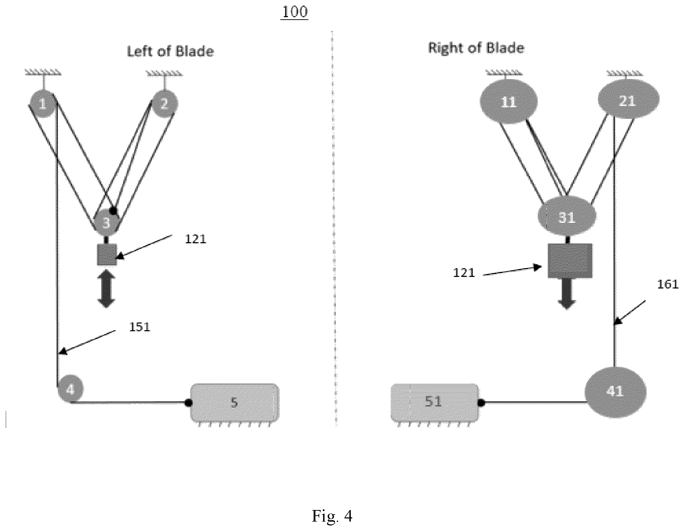

Fig. 4: illustrates rope, pulleys and winch arrangement of the present invention.

### Detailed description:

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

The terms "comprises", "comprising", "includes", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present invention provides a system and method for installation and removal of a wind turbine blade. The Invention replaces wind turbine blade through a process which eliminates the use of main crane from the whole process. The process of the present invention also requires less space compared to the earlier method.

In an embodiment, the system (100) for installation and removal of a blade (121) of a wind turbine generator (110), the system (100) comprising:
a) a first (3) and a second pulley (31) mounted respectively on the first and second sides of the blade (121);
b) a first winch (5) and a second winch (51) mounted on the ground in proximity of a base of a tower (201) of the wind turbine generator (110), the locations of the first and second winches (4, 41) corresponding to the same longitudinal plane as the respective first and second sides of the blade (121);
c) a load bearing mechanism (111) mounted on a nacelle (101) of the wind turbine generator (110), the load bearing mechanism (111) comprising a first pair of pulleys (1, 2) mounted on the load bearing mechanism (111) corresponding to a location in the same longitudinal plane as the first side of the blade and a second pair of pulleys (11, 21) mounted on the load bearing mechanism (111) corresponding to a location in the same longitudinal plane as the second side of the blade;
d) a first lifting cable or rope (151) connected to the first winch (5) and passing through a first winch pulley (4) mounted on the ground in proximity to the first winch (5), the first pulley (3) and the first pair of pulleys (1, 2) such that upon actuating the first winch (5), the blade (121) is moved upwards for installation or downwards for removal;
e) a second lifting cable or rope (161) connected to the second winch (51) and passing through the second winch pulley (41) mounted on the ground in proximity to the first winch (5), the second pulley (31) and the second pair of pulleys (11, 21) such that upon actuating the second winch (51), the blade (121) is moved upwards or downwards; and
synchronizing the actuations of the first and the second winches (5, 51) so as to move the blade (121) upwards or downwards in a balanced load condition on either side, wherein the blade (121) is moved upwards or downwards.

In an embodiment, the present invention provides the method for installation and removal of a wind turbine blade (121) by the system (100), the method comprising:
a) removing a nacelle cover from a wind turbine nacelle (101);
b) installing a load bearing mechanism (111) on the wind turbine nacelle (101) to support the blade (121) during installation and removal where the load bearing mechanism (111) length is extended over a hub;
c) manually mounting the load bearing mechanism (111) on the nacelle (101) followed by attaching the first (3) and the second pulley (31) to the blade (121), to be installed/ removed, and connecting the ropes (151, 161) to the first pulley (3) and the second pulley (310) at one end and another end of the ropes (151, 161) to a mechanical winches (5, 51) positioned at the base of the wind turbine tower or on the ground near the tower;
   synchronizing the actuations of the first and the second winches (5, 51) so as to move the blade (121) upwards or downwards in a balanced load condition on either side, wherein the blade (121) is moved upwards or downwards.

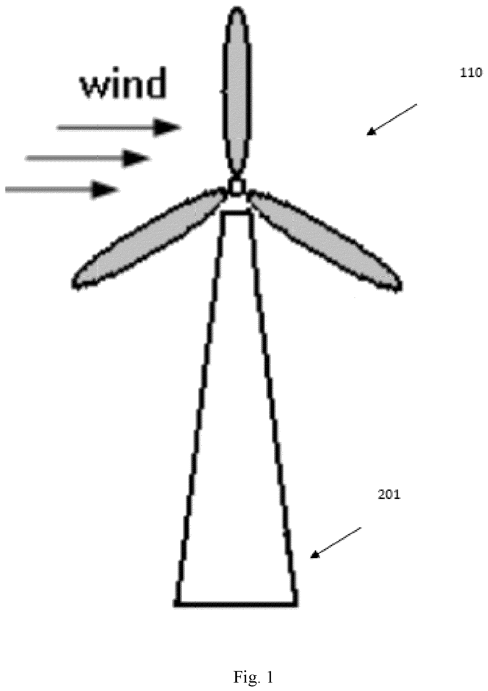

FIG. 1 shows an embodiment of the wind turbine, provided by the present invention.

In an embodiment, the components needed for de-erecting and re-erecting the wind turbine blade (121) are at least a load bearing mechanism (111), a first winch (5) and a second winch (51), a first lifting cable or rope (151), and a second lifting cable/rope (161).
at least a first pair of pulleys (1, 2), second pair of pulleys (11, 21) mounted on the load bearing mechanism and a first winch pulley (4) and a second winch pulley (41). Further, the winches (5, 51) are used as a load pulling mechanism as it can be easily transported and has a large power to size ratio.

In an embodiment, the principal factors affecting the selection of the winches are winch rating, load pulling vs lifting, power and duty cycle.

Some other factors that affect the winches selection with reference to its application for de-erecting and re-erecting wind turbine blades are rope speed, solenoid type, motor type and its use in rugged outdoor terrains.

In an embodiment, the system of the present invention consists of at least eight pulleys. The first (3), the second pulley (31), the first pair of pulleys (1, 2), the second pair of pulleys (11, 21), first winch pulley (4) and the second winch pulley (41). The factors that affect the selection of the pulleys are the capacity to handle the load and the power to be transmitted.

In an embodiment, the system of the present invention comprises ropes (151, 161) which pass through the eight pulleys to lift the blade (121). However, in place of the rope, belt and chain can be interchangeably used.

In an embodiment, the load bearing mechanism (111) may be a frame (111). The frame (111) is a kind of rectangular roof mounted on two pillar the other end of the pillars are mounted on the nacelle (101) which replicates as a cantilever beam in shape, however, the shape can be changed as per the wind turbine generator.

In an embodiment, the pulleys (1, 2, 11, 21) mounted on the frame can vary depending on the size of the nacelle (101) and the weight of the blade. However, the position of the first pair of pulleys (1, 2) needs to be adjacent to each other for supporting the first side of the blade (121) such that the ropes (151) form a triangular shape as shown in the figures. Similarly, the position of the second pair of pulleys (11, 21) needs to be adjacent to each other for supporting the second side of the blade (121) such that the ropes (161) form a triangular shape as shown in the figures

In an embodiment, the frame (111) of the present invention is in a completely disassembled structure to begin with. Technicians transport the components of the frame (111) via an elevator (within the tower), and it is then assembled on the nacelle (101) and after the work is done, again it is disassembled.

In an embodiment, in the present invention before the installing or hoisting of blade (121), on the either sides (first and second sides) of the blade (121) to be installed, the first pulley (3) on the first side of blade (121) is mounted on clamps, which are connected to the first side of the blade (121) using a barrel bolt connection and a web sling. Similarly, the second pulley (31) on the second side of the blade (121) is mounted.

Separately, a technician uses an elevator within the tower of the wind turbine to reach the nacelle (101), thereafter, an appropriate location is identified on the nacelle (101) for mounting the frame (111). The place to mount the frame (111) can vary according to the capacity of the wind turbine and the shape of the nacelle (101).The technician mounts the frame (111) on the nacelle (101) and thereafter mounts the first pair of pulleys (1, 2) on the frame such that they are in a location in the same longitudinal plane as the first side of the blade (121) and a second pair of pulleys (11, 21) are mounted on the frame (111) (as shown in the figure) such that they are in a location in the same longitudinal plane as the second side of the blade (121). The first and second lifting cables (151, 161) are then engaged with the mechanical winches (5, 51) and the pulleys as described below. The blade (121) is now fully supported on either sides. The mechanical winches (5, 51) are actuated synchronously such that the blade (121) is moved slowly upwards from horizonal position on the ground or transport vehicle to a vertical position to which allows engaging the root section of the blade with a rotor of the wind turbine blade. The tail end of the blade (121) is supported by an auxiliary crane (131) while the blade (121) is being moved upwards. After completion of the process the frame (111) is dismantled from the nacelle (101) and thereafter the nacelle cover is installed on the nacelle (101).

In an embodiment, in order to remove the blade (121) from the wind turbine for maintenance or removal, the same process starts with removing a nacelle cover from a wind turbine nacelle (101). The blade (121) to be removed is brought in a position near the nacelle (101) so that the technician can access the blade (121) on either sides (first side and second side of the blade). The first pulley (3) on the first side of blade (121) is mounted on clamps, which are connected to the first side of the blade (121) using a barrel bolt connection and a web sling. Similarly, the second pulley (31) on the second side of the blade (121) is mounted. Further, the technician mounts the frame (111) on the nacelle (101) and thereafter mounts the pulleys (1, 2, 11, 21) on the frame (11) as described above. The first and second lifting cables (151, 161) are then engaged with the mechanical winches (5, 51) and the pulleys (4, 41) as described below. The blade (121) is then disengaged from the rotor while being fully supported. The mechanical winches (5, 51) are actuated synchronously such that the blade (121) is moved slowly downwards from vertical position to horizonal position on the ground or transport vehicle The tail end of the blade (121) is supported by an auxiliary crane (131) while the blade (121) is being moved downwards. After completion of the process the pulley support frame (111) is dismantled from the nacelle (101) and thereafter the nacelle cover is installed on the nacelle (101).

In an embodiment, the rope alignment in the present invention is in such a way that it starts with the first lifting cable/rope (151) is connected to the first winch (5) and passing through a first winch pulley (4) mounted on the ground in proximity to the first winch (5), the first pulley (3) and the first pair of pulleys (1, 2) such that upon actuating the first winch (5), the blade (121) is moved upwards for installation or downwards for removal. Similarly, second lifting cable/rope (161) is connected to the second winch (51) and passing through the second winch pulley (41) mounted on the ground in proximity to the first winch (5), the second pulley (31) and the second pair of pulleys (11, 21) such that upon actuating the second winch (51), the blade (121) is moved upwards or downwards.

In an embodiment, the pulley and rope arrangement of the present invention provides mechanical advantage (MA) such as for each double sheave pulley arrangement, the mechanical advantage is doubled due to the multiple rope segments supporting the load.

### For example, counting rope segments:

Each double sheave pulley (when properly arranged) effectively doubles the number of rope segments supporting the load. Assuming the arrangement maximizes the number of rope segments, with three double sheave pulleys, each introducing two additional segments.

### Total Segments Calculation:

1. First pass through Pulley C: 3 segments.
2. Second pass through Pulley C: 6 segments (adding three more).
3. Third pass through Pulley C: 9 segments (adding three more).

Thus, we have a total of 9 rope segments supporting the movable pulley.

### Formula for Mechanical Advantage

MA=Number of Rope Segments Supporting the Load\text {MA} = \text f Number of Rope Segments Supporting the Load}MA=Number of Rope Segments Supporting the Load

### Mechanical Advantage of the System

Given the configuration with two double sheave pulleys, one triple sheave pulley, and one single sheave pulley: MA=9\text {MA} = 9MA=9

This means the system provides a mechanical advantage of 9. Therefore, the force needed to lift the load is reduced by a factor of 9, though the length of rope pulled will be nine times the distance the load is lifted.

Many modifications and other embodiments of the invention set forth herein will readily occur to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

The foregoing description of embodiments of the invention has been presented for purposes of illustration and description. It is not intended to be exhaustive or to limit the invention to the precise form disclosed, and modifications and variations are possible in light of the above teachings or may be acquired from the practice of the invention. The embodiments were chosen and described in order to explain the principals of the invention and its practical application to enable one skilled in the art to utilize the invention in various embodiments and with various modifications as are suited to the particular use contemplated.

## Claims

1. A system (100) for installation and removal of a blade (121) of a wind turbine generator (110), the system (100) comprising:
a) a first (3) and a second pulley (31) mounted respectively on the first and second sides of the blade (121);
b) a first winch (5) and a second winch (51) mounted on the ground in proximity of a base of a tower (201) of the wind turbine generator (110), the locations of the first and second winches (4, 41) corresponding to the same longitudinal plane as the respective first and second sides of the blade (121);
c) a load bearing mechanism (111) mounted on a nacelle (101) of the wind turbine generator (110), the load bearing mechanism (111) comprising a first pair of pulleys (1, 2) mounted on the load bearing mechanism (111) corresponding to a location in the same longitudinal plane as the first side of the blade and a second pair of pulleys (11, 21) mounted on the load bearing mechanism (111) corresponding to a location in the same longitudinal plane as the second side of the blade;
d) a first lifting cable or rope (151) connected to the first winch (5) and passing through a first winch pulley (4) mounted on the ground in proximity to the first winch (5), the first pulley (3) and the first pair of pulleys (1, 2) such that upon actuating the first winch (5), the blade (121) is moved upwards for installation or downwards for removal;
e) a second lifting cable or rope (161) connected to the second winch (51) and passing through the second winch pulley (41) mounted on the ground in proximity to the first winch (5), the second pulley (31) and the second pair of pulleys (11, 21) such that upon actuating the second winch (51), the blade (121) is moved upwards or downwards; and
synchronizing the actuations of the first and the second winches (5, 51) so as to move the blade (121) upwards or downwards in a balanced load condition on either side, wherein the blade (121) is moved upwards or downwards.

2. The system (100) for installation and removal of a wind turbine blade as claimed in claim 1, wherein the load bearing mechanism (111) comprises a frame mounted on the nacelle (101) by at least two rods clamped on the nacelle to support load bearing operation.

3. The system (100) for installation and removal of a wind turbine blade as claimed in claim 1, wherein an auxiliary crane (131) is used to remove the blade (121) from the first pulley (3) and the second pulley (31), ensuring it's safely lowered to the ground without damage.

4. The system (100) for installation and removal of a wind turbine blade as claimed in claim 1, wherein the first pair of pulleys (1, 2) and the second pair pulleys (11, 21) have at least two grooves\sheaves, wherein two grooves\sheaves provide two separate grip points to the ropes (151, 161).

5. The system (100) for installation and removal of a wind turbine blade as claimed in claim 1, wherein the first (3) and the second pulley (31) has at least three grooves\sheaves for the ropes (151, 161).

6. The system (100) for installation and removal of a wind turbine blade as claimed in claim 1, wherein the first winch pulley (4) and the second winch pulley (41) have one groove/sheaves for the ropes (151, 161).

7. The system (100) for installation and removal of a wind turbine blade as claimed in claim 1, wherein the winches (5, 51) have a motor configured to generate torque to a spool of rope causing it to wind and unwind around itself.

8. The system (100) for installation and removal of a wind turbine blade as claimed in claim 1, wherein when the spool rotates the tension of the ropes (151, 161) increases and this tension is transferred through ropes (151, 161) to the wind turbine needs to be replace.

9. A method for installation and removal of a wind turbine blade (121) by the system (100) as claimed in claim 1, the method comprising:
a) removing a nacelle cover from a wind turbine nacelle (101);
b) installing a load bearing mechanism (111) on the wind turbine nacelle (101) to support the blade (121) during installation and removal where the load bearing mechanism (111) length is extended over a hub;
c) manually mounting the load bearing mechanism (111) on the nacelle (101) followed by attaching the first (3) and the second pulley (31) to the blade (121), to be installed/ removed, and connecting the ropes (151, 161) to the first pulley (3) and the second pulley (31) on one end and another end of the ropes (151, 161) to a mechanical winches (5, 51) positioned at the base of the wind turbine tower or on the ground near the tower;
synchronizing the actuations of the first and the second winches (5, 51) so as to move the blade (121) upwards or downwards in a balanced load condition on either side, wherein the blade (121) is moved upwards or downwards.
